# EUROPEAN PATENT SPECIFICATION

(11) **EP 1 847 489 B1**
(45) Date of publication and mention of the grant of the patent: **22.10.2008**
(21) Application number: 07106409.1
(22) Date of filing: 18.04.2007
(51) Int. Cl.: B65G 47/90, B65B 21/18

(54) **Gripper and arrangement for handling products**
Greifer und Anordnung zur Handhabung von Produkten
Pince et dispositif pour la manutention de produits

(30) Priority: 21.04.2006 FI 20060184 U
(43) Date of publication of application: 24.10.2007
(73) Proprietor: Nekos Oy, 33800 Tampere (FI)
(72) Inventor: Kankare, Seppo, 32270 Metsämaa (FI)
(74) Representative: Kaukonen, Juha Veikko

(56) References cited:
- EP-A- 1 232 972
- DE-B- 1 204 130

## Description

### BACKGROUND OF THE INVENTION

The invention relates to a gripper.

Further, the invention relates to an arrangement for handling at least one product having a substantially round cross-section, the arrangement comprising at least one gripper.

Within bulk industry or an industry comparable to it, it is very common to use various work devices operating independently or automatically, such as industrial robots, for handling products. In connection with such work devices, it is common to use various grippers that allow the work device to grip a product to handle the product, such as to move it from one place to another.

A gripper having gripping elements arranged at a distance from each other is known, for example, from DE 1 204 130.

For example, within brewing industry various work devices are used for example for handling bottles. In work devices intended for handling bottles, grippers are typically cup grippers. In one embodiment of a cup gripper a plastic film is arranged on the inner surface of the cup structure which is open at one end in such a way that pressurized air can be conveyed between the inner surface of the cup structure and the plastic film. When the open end of the cup gripper has been guided around the neck of the bottle to be moved, pressurized air is conveyed between the inner surface of the cup structure and the plastic film, as a result of which the plastic film expands in the inside of the cup structure and grips the bottle to be moved around its cap and neck. In another embodiment of a cup gripper, the plastic film of the cup has been replaced with a mechanical pneumatically operated piston and formed in such a way that the side parts of the piston directed towards the open end of the cup are arranged to bend towards the mid-axis of the cup part as the piston is moving, and thus to grip the bottle to be moved around the cap and neck.

A problem with cup grippers provided with a plastic film, in particular, is that crown caps used in some bottles may break the film over time. Further, both above-mentioned embodiments of a cup gripper comprise wearing parts, in other words either a plastic film or a mechanical piston, whose properties change over time and which must be consequently replaced with new parts from time to time. Furthermore, aligning bottles in their proper places on the bases used for their storing and transportation is difficult because cup grippers cannot prevent the free end of the bottles from swinging while they are being moved from one place to another at a high speed.

### BRIEF DESCRIPTION OF THE INVENTION

An object of this invention is to achieve a novel and improved gripper solution.

The gripper according to the invention is characterized in that the gripper comprises at least one gripping unit, the gripping unit comprising at least one first support element and at least one second support element, which support elements are substantially parallel and which support elements comprise at least two gripping elements arranged in the support elements at a distance from each other, substantially on the same line and substantially at the same point relative to the opposite support element, the gripping elements being arranged in the support elements in such a way that the gripping elements are substantially parallel to each other, and that the longitudinal mid-axis of the gripping elements forms an angle substantially perpendicular to the support elements, and that the gripping unit further comprises means for moving the support elements towards each other and away from each other to move the gripping elements positioned in the support elements towards each other and away from each other.

The arrangement according to the invention is characterized in that the gripper comprises at least one gripping unit, the gripping unit comprising at least one first support element and at least one second support element, which support elements are substantially parallel and which support elements comprise at least two gripping elements arranged in the support elements at a distance from each other, substantially on the same line and substantially at the same point relative to the opposite support element, the gripping elements being arranged in the support elements in such a way that the gripping elements are substantially parallel to each other, and that the longitudinal mid-axis of the gripping elements forms an angle substantially perpendicular to the support elements, and that the gripping unit further comprises means for moving the support elements towards each other and away from each other to move the gripping elements positioned in the support elements towards each other and away from each other, whereby the support elements are, to allow a product to be gripped, arranged to be moved towards each other in such a way that the gripping elements in the opposite support elements are arranged to become placed on the sides of the product and to press against the product in such a way that the gripping elements support the product by the sides of the product.

The gripper comprises at least one gripping unit, which comprises at least one first support element and at least one second support element which are substantially parallel and which comprise at least two gripping elements arranged in the support elements at a distance from each other, substantially on the same line and substantially at the same point relative to the opposite support element. The gripping elements are further arranged in support elements in such a way that the gripping elements are substantially parallel to each other and that the longitudinal mid-axis of the gripping elements forms an angle substantially perpendicular to the support elements. The gripping unit of the gripper further comprises means for moving support elements towards each other and away from each other to move gripping elements in the support elements towards each other and away from each other. According to an embodiment, the gripping elements are arranged fixedly in the support elements. According to a second embodiment, at least one cylinder is arranged in connection with the first support element, and a cylinder piston is arranged in connection with the second support element, whereby the support elements are movable towards each other and away from each other by using the cylinder and the piston. According to a third embodiment, the cylinder is a pneumatically operated cylinder. According to a fourth embodiment, the gripping element is coated with a material having a high friction coefficient.

An advantage of the gripper is its simple structure and operation, because the only movement required in the gripping unit of the gripper is the one with which the support elements are moved towards each other and away from each other. Owing to the gripping elements, the products to be handled are pressed into one tight package relative to each other in such a way that the products are prevented from swinging. At the same time, the gripping elements also align the products to be handled relative to each other in such a way that the products are prevented from moving relative to each other. When the gripping elements are arranged fixedly in the support elements, the gripping elements cannot, even by accident, move relative to each other and thus cannot disturb the operation of the apparatus. By means of the cylinder/piston solution, support elements can be moved relative to each other by means of a simple implementation. The cylinders being pneumatically operated, the movement between the support elements can be made extremely fast in a simple manner. When the gripping elements are coated with a material having a high friction coefficient, the products to be handled are prevented from sliding relative to the gripping elements.

### BRIEF DESCRIPTION OF THE FIGURES

Some embodiments of the invention are explained in more detail in the attached drawings, in which
Figure 1 shows schematically a side view of a gripper;
Figure 2 shows schematically a top view of the gripper according to Figure 1; and
Figure 3 shows schematically an end view of the gripper according to Figure 1.

In the figures, embodiments of the invention are shown simplified for the sake of clarity. Similar parts are denoted with the same reference numerals in the figures.

### DETAILED DESCRIPTION OF SOME EMBODIMENTS OF THE INVENTION

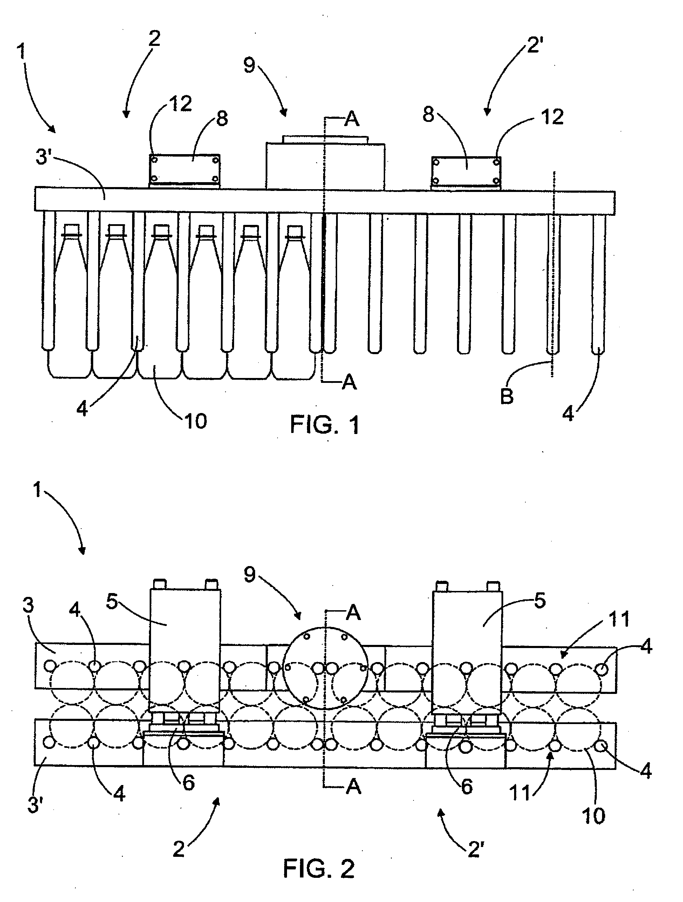

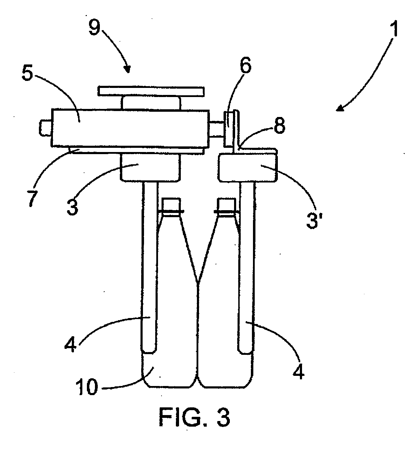

Figure 1 shows schematically a side view of a gripper 1, Figure 2 shows schematically a top view of the gripper according to Figure 1, and Figure 3 shows schematically an end view of the gripper according to Figure 1. The gripper 1 according to Figures 1 to 3 comprises two gripping units 2 and 2' that are, in the embodiment of the figures, structurally formed of one structure. In Figures 1 and 2 the gripping units 2 and 2' are, for the sake of clarity, separated from each other by a dot-and-dash line A - A. The gripping unit 2 comprises two support elements, i.e. a first support element 3 and a second support element 3', which in the case of the embodiment shown by the figures also form the support elements of the gripping unit 2'. Several gripping elements 4 preferably having a substantially round cross-section are arranged in the support elements. The gripping elements 4 are arranged in the support element preferably on the same line and at equal distances from each other. The gripping elements 4 are arranged in the support elements 3 and 3' in such a way that the gripping elements 4 are substantially parallel to each other and that the longitudinal mid-axis B of the gripping elements 4 form an angle substantially perpendicular to the longitudinal axis of the support elements 3 and 3'. The gripping elements 4 are arranged in the support elements fixedly in such a way that the gripping elements 4 cannot be moved relative to the support elements, but the gripping elements 4 can be arranged in the support elements also in such a way, for example, that their mutual distance can be changed, if required.

The support elements 3 and 3' are combined with each other in such a way that their mutual distance can be changed. In the embodiment of the figures, this is implemented with a cylinder solution in which cylinders 5 are fixed to the support element 3 by means of first fixing elements 7, and pistons 6 of the cylinders 5 are fixed to the support element 3' by means of second fixing elements 8. The pistons 6 can be fixed to the fixing elements 8 for instance with a screw, nut or the like fixing arrangement 12. By means of the cylinders 5 and pistons 6, the support elements can be moved towards each other or away from each other by the distance allowed by the length of the piston 6 of the cylinder 5. The cylinders 5 can be used hydraulically or pneumatically, for example. The cylinders 5 and the pistons 6 thus form means for moving the support elements 3 and 3' of the gripping unit 2 and the gripping elements 4 positioned in them to different distances from each other. Instead of a solution based on cylinders 5, it is also feasible to move support elements relative to each other by means of solutions utilizing electric motor drives, for instance. The gripper 1 further comprises a fixing structure 9, by means of which the gripper 1 can be fixed to be part of an automatic work device, such as an industrial robot. The fixing structure also comprises a joint around which the gripper 1 can rotate, if required. Figure 2 shows only the outlines of the cylinder 5, piston 6 and fixing structure 9 to allow the rest of the structure of the gripper 1 to become clearer in Figure 2.

The gripper 1 can be used particularly for handling drinking bottles 10, for example, and in the case shown by the figures the structure and operation of the gripper 1 is presented specifically in connection with the handling of drinking bottles 10. For the sake of clarity, Figure 1 shows drinking bottles 10 only in connection with the gripping unit 2, while Figure 2 shows them in connection with both gripping units 2 and 2'. Also for the sake of clarity, Figure 2 shows the drinking bottles 10 by broken lines 10. To grip the drinking bottles 10, the support elements 3 and 3' are moved away from each other by means of the cylinders 5 and the pistons 6; in other words the gripping units 2 and 2' of the gripper 1 open. Subsequently, the gripping units are guided above the bottle rows in such a way that, as seen from Figure 3, the support element 3 and the gripping elements 4 in it become positioned on the left side of the bottle rows, and the support element 3' and the gripping elements in it become positioned on the right side of the bottle rows. Next, the support elements 3 and 3' are moved towards each other by means of the pistons 6 of the cylinders 5; in other words the gripping units 2 and 2' of the gripper 1 close. Thus, the gripping elements 4 at the ends of the support elements 3 and 3' come into contact with the sides of the drinking bottles 10 at the ends of the bottle rows. Correspondingly, the other gripping elements 4 in the support elements 3 and 3' come into contact with the sides of the drinking bottles 10 at those points where the bottle rows have, between bottles 10, open spaces 11 directed outwards from the bottle rows. The support elements 3 and 3' are moved towards each other until the gripping elements 4 become tightly positioned against the bottles 10 in such a way that the bottles 10 are supported against each other as well as against the gripping elements 4, after which the drinking bottle rows can be lifted and moved to another place.

In the solution shown in Figures 1 to 3, each individual drinking bottle 10 is directly subjected to the forces caused by two gripping elements 4, the forces being in the direction of the radius of the cross-section of the drinking bottle 10. In addition to this force effect, each drinking bottle is supported by the force effects of the drinking bottles adjacent to it. The number of gripping elements 4 in the support elements of one gripping unit 2 is one more than the number of support elements in one drinking bottle row to be lifted. Thus, both gripping units 2 and 2' have seven gripping elements in one support element, because in the example case there are six bottles in one row of a pair of drinking bottle rows to be lifted with one gripping unit.

The gripping elements 4 are dimensioned in their longitudinal direction, i.e. in the case shown by Figures 1 to 3 in the elevation of the gripper 1, preferably in such a way that the gripping elements extend at least over halfway in the elevation of the bottles 10, whereby the gripping elements 4 support the bottles 10 in such a way that they cannot swing but are supported tightly against each other without, however, moving relative to each other.

The gripper has a simple structure. In addition, the operation of the gripper is simple because the only movement required in the gripping unit 2 and 2' is the one with which the support elements 3 are moved towards each other and away from each other. The gripping elements 4 press the bottles into one tight package relative to each other in such a way that the bottles cannot swing. At the same time, the gripping elements 4 also align the bottles relative to each other in such a way that the bottles cannot move relative to each other and that the bottles are accurately guided to their places on bases used for their transportation and storing, not shown in the figures. The shortest distance possible between the support elements 3 and 3' is adjusted in such a way that the pressing force directed at the bottles does not break the bottles.

In the embodiment of the figures, two gripping units 2 and 2' are thus combined into one structure in such a way that the gripping units 2 and 2' have shared support elements 3, 3' and shared means for moving the support elements 3, 3' relative to each other. This has led to a structure in which there are two gripping elements 4 very close to each other in the middle of the support elements 3, 3'. This, in turn, is due to the fact that one standardsized base intended for transporting and storing drinks and for a given bottle size has six bottles in one row, whereby the solution shown in the figures allows two rows of bottles to be lifted simultaneously from two adjacent bases, i.e. 24 bottles altogether.

Besides for bottles 10, the solution presented may naturally be used for handling cans or the like products, the cross-section of which is substantially circular in such a way that between the adjacent products positioned in a row there remains an open space directed outwards from the row. Further, the same gripper solution may be used for handling what are called group packages. In group packages, two or more bottles are formed as one package by means of tight protective plastic or the like curled round the bottles. Since the protective plastic supports the bottles in such a way that they form one package, the gripper does not necessarily need a separate gripping element **4** in each space between two bottles, but in this case the gripper can have, at a minimum, four gripping elements **4** altogether, i.e. two in each support element 3 and 3', whereby the gripping elements **4** are arranged to be positioned in connection with the bottles at the corners of the group package.

The gripping elements **4** can be coated with a material with a high friction coefficient that increases the friction between the elements and the objects to be handled. This may take place for example by coating the gripping elements with such a material, or a separate cover made of such a material may be slid onto the gripping elements 4. The support elements 3 and 3' may be, for instance, hollow tube structures or solid beam structures, and the gripping elements 4 may be, for instance, hollow tube structures or solid rod or bar structures. The support elements 3, 3' and the gripping elements 4 may be made of metal, for example, or of another material suitable for the purpose. The support elements 3, 3' and the gripping elements 4 being of metal, for example, the gripping elements 4 can be fixed to the support elements 3, 3' by welding.

The gripping unit 2 or 2' according to Figures 1 to 3 is thus applicable to moving two rows of bottles. One gripper may, however, comprise several gripping units or, on the basis of the embodiment of Figures 1 to 3, several structures formed by two successive gripping units 2 and 2' adjacent to each other in such a way that it is possible to handle a whole pallet of drinking bottles at a time with a single gripper.

In some cases, features described in this application can be used as such, irrespective of other features. On the other hand, features described in this application can be, if required, combined to form different combinations.

The drawings and the related specification are only intended to illustrate the idea of the invention. The details of the invention may vary within the scope of the claims.

## Claims

1. A gripper (1) comprising at least one gripping unit (2, 2'), the gripping unit (2, 2') comprising at least one first support element (3) and at least one second support element (3'), which support elements (3, 3') are substantially parallel and which support elements (3, 3') comprise at least two gripping elements (4) arranged in the support elements (3, 3') at a distance from each other, substantially on the same line and substantially at the same point relative to the opposite support element (3, 3'), the gripping elements (4) being arranged in the support elements (3, 3') in such a way that the gripping elements (4) are substantially parallel to each other, and that the longitudinal mid-axis (B) of the gripping elements (4) forms an angle substantially perpendicular to the support elements (3, 3'), and that the gripping unit (2, 2') further comprises means (5, 6) for moving the support elements (3, 3') towards each other and away from each other to move the gripping elements (4) positioned in the support elements (3, 3') towards each other and away from each other.

2. A gripper according to claim 1, **characterized in that** the gripping elements (4) are arranged fixedly in the support elements (3, 3').

3. A gripper according to claim 1 or 2, **characterized in that** the gripping element (4) is a hollow tube structure or a solid rod or bar structure.

4. A gripper according to any one of the preceding claims, **characterized in that** the support element (3, 3') is a hollow tube structure or a solid beam structure.

5. A gripper according to any one of the preceding claims, **characterized in that** at least one cylinder (5) is arranged in connection with the first support element (3) and that a piston (6) of the cylinder (5) is arranged in connection with the second support element (3'), whereby the support elements (3, 3') are movable towards each other and away from each other by using the cylinder (5) and the piston (6).

6. A gripper according to claim 5, **characterized in that** the cylinder (5) is a pneumatically operated cylinder.

7. A gripper according to any one of the claims, **characterized in that** the gripping element (4) is coated with a material having a high friction coefficient.

8. A gripper according to any one of the preceding claims, **characterized in that** the gripper (1) comprises two gripping units (2, 2') comprising one shared first support element (3) and one shared second support element (3'), both of the support elements (3, 3') comprising seven first gripping elements (4) corresponding to the first gripping unit (2) and seven second gripping elements (4) corresponding to the second gripping unit (2).

9. An arrangement for handling at least one product (10) having a substantially round cross-section, the arrangement comprising at least one gripper (1) comprising at least one gripping unit (2, 2'), the gripping unit (2, 2') comprising at least one first support element (3) and at least one second support element (3'), which support elements (3, 3') are substantially parallel and which support elements (3, 3') comprise at least two gripping elements (4) arranged in the support elements (3, 3') at a distance from each other, substantially on the same line and substantially at the same point relative to the opposite support element (3, 3'), the gripping elements (4) being arranged in the support elements (3, 3') in such a way that the gripping elements (4) are substantially parallel to each other, and that the longitudinal mid-axis (B) of the gripping elements (4) forms an angle substantially perpendicular to the support elements (3, 3'), and that the gripping unit (2, 2') further comprises means (5, 6) for moving the support elements (3, 3') towards each other and away from each other to move the gripping elements (4) positioned in the support elements (3, 3') towards each other and away from each other, whereby the support elements (3, 3') are, to allow a product (9) to be gripped, arranged to be moved towards each other in such a way that the gripping elements (4) in the opposite support elements (3, 3') are arranged to become placed on the sides of the product (9) and to press against the product (10) in such a way that the gripping elements (4) support the product (10) by the sides of the product (10).

10. An arrangement according to claim 9, **characterized in that** the products (10) are arranged in two rows, whereby the support elements (3, 3') are, to allow the products (10) to be gripped, arranged to be moved towards each other in such a way that the gripping elements (4) in the support elements (3, 3') are arranged to become placed on the sides of the products (10) at the ends of the corresponding product row, and in the open spaces (11) directed outwards from the product row on the sides of the products (10), whereby, when the support elements (3, 3') are moved towards each other, the gripping elements (4) are arranged to press against the products (10) in such a way that each individual product (10) in the product row is supported both by the effect of two gripping elements (4) by the sides of the product and by the effect of the products (4) positioned adjacent the product (4).

11. An arrangement according to claim 10, **characterized in that** the number of gripping elements (4) comprised by the support elements (3, 3') is one more than the number of products (10) to be handled in the product row.

## Patentansprüche

1. Greifvorrichtung (1), umfassend wenigstens eine Greifeinheit (2, 2'), wobei die Greifeinheit (2, 2') wenigstens ein erstes Trägerelement (3) und wenigstens ein zweites Trägerelement (3') umfasst, wobei die Trägerelemente (3, 3') im Wesentlichen parallel sind und wobei die Trägerelemente (3, 3') wenigstens zwei Greifelemente (4) umfassen, die in den Trägerelementen (3, 3') in einem Abstand voneinander im Wesentlichen auf derselben Geraden und im Wesentlichen an demselben Punkt relativ zu dem gegenüberliegenden Trägerelement (3, 3') angeordnet sind, wobei die Greifelemente (4) derart in den Trägerelementen (3, 3') angeordnet sind, dass die Greifelemente (4) im Wesentlichen parallel zueinander sind und dass die longitudinale Mittelachse (B) der Greifelemente (4) im Wesentlichen einen rechten Winkel mit den Trägerelementen (3, 3') ausbildet und dass die Greifeinheit (2, 2') ferner Mittel (5, 6) zum Bewegen der Trägerelemente (3, 3') aufeinander zu und voneinander weg umfasst, um die Greifelemente (4), die in den Trägerelementen (3, 3') positioniert sind, aufeinander zu und voneinander weg zu bewegen.

2. Greifvorrichtung nach Anspruch 1, **dadurch gekennzeichnet, dass** die Greifelemente (4) feststehend in den Trägerelementen (3, 3') angeordnet sind.

3. Greifer nach Anspruch 1 oder 2, **dadurch gekennzeichnet, dass** das Greifelement (4) eine hohle Röhrenstruktur oder eine solide Stangen- oder Stabstruktur ist.

4. Greifvorrichtung nach einem der vorhergehenden Patentansprüche, **dadurch gekennzeichnet, dass** das Trägerelement (3, 3') eine hohle Röhrenstruktur oder eine solide Balkenstruktur ist.

5. Greifvorrichtung nach einem der vorhergehenden Ansprüche, **dadurch gekennzeichnet, dass** wenigstens ein Zylinder (5) in Verbindung mit dem ersten Trägerelement (3) angeordnet ist und dass ein Kolben (6) des Zylinders (5) in Verbindung mit dem zweiten Trägerelement (3') angeordnet ist, wodurch die Trägerelemente (3, 3') aufeinander zu und voneinander weg bewegt werden können, indem der Zylinder (5) und der Kolben (6) verwendet werden.

6. Greifvorrichtung nach Anspruch 5, **dadurch gekennzeichnet, dass** der Zylinder (5) ein pneumatisch betätigter Zylinder ist.

7. Greifer nach einem der vorhergehenden Ansprüche, **dadurch gekennzeichnet, dass** das Greifelement (4) mit einem Material beschichtet ist, das einen großen Reibungskoeffizienten aufweist.

8. Greifvorrichtung nach einem der vorhergehenden Ansprüche, **dadurch gekennzeichnet, dass** die Greifvorrichtung (1) zwei Greifeinheiten (2, 2') umfasst, die ein gemeinsames erstes Trägerelement (3) und ein gemeinsames zweites Trägerelement (3') umfassen, wobei beide Trägerelemente (3, 3') sieben erste Greifelemente (4) umfassen, die der ersten Greifeinheit (2) entsprechen, sowie sieben zweite Greifelemente (4), die der zweiten Greifeinheit (2) entsprechen.

9. Anordnung zum Handhaben wenigstens eines Produkts (10) mit einem im Wesentlichen runden Querschnitt, wobei die Anordnung wenigstens eine Greifvorrichtung (1) umfasst, umfassend wenigstens eine Greifeinheit (2, 2'), wobei die Greifeinheit (2, 2') wenigstens ein erstes Trägerelement (3) und wenigstens ein zweites Trägerelement (3') umfasst, wobei die Trägerelemente (3, 3') im Wesentlichen parallel sind und wobei die Trägerelemente (3, 3') wenigstens zwei Greifelemente (4) umfassen, die in den Trägerelementen (3, 3') in einem Abstand voneinander im Wesentlichen auf derselben Geraden und im Wesentlichen an demselben Punkt relativ zu dem gegenüberliegenden Trägerelement (3, 3') angeordnet sind, wobei die Greifelemente (4) derart in den Trägerelementen (3, 3') angeordnet sind, dass die Greifelemente (4) im Wesentlichen parallel zueinander sind und dass die longitudinale Mittelachse (B) der Greifelemente (4) einen im Wesentlichen rechten Winkel mit den Trägerelementen (3, 3') ausbildet und dass die Greifeinheit (2, 2') ferner Mittel (5, 6) zum Bewegen der Trägerelemente (3, 3') aufeinander zu und voneinander weg umfasst, um die Greifelemente (4), die in den Trägerelementen (3, 3') positioniert sind, aufeinander zu und voneinander weg zu bewegen, wodurch die Trägerelemente (3, 3'), um zu ermöglichen, dass ein Produkt (9) gegriffen wird, angeordnet werden, um derart aufeinander zu bewegt zu werden, dass die Greifelemente (4) in den gegenüberliegenden Trägerelementen (3, 3') angeordnet sind, um derart auf den Seiten des Produktes (9) angeordnet zu werden und gegen das Produkt (10) zu drücken, dass die Greifelemente (4) das Produkt (10) an den Seiten des Produkts (10) tragen.

10. Anordnung nach Anspruch 9, **dadurch gekennzeichnet, dass** die Produkte (10) in zwei Reihen angeordnet sind, wobei die Trägerelemente (3, 3'), um zu ermöglichen, dass die Produkte (10) gegriffen werden, angeordnet sind, um derart aufeinander zu bewegt zu werden, dass die Greifelemente (4) in den Trägerelementen (3, 3') angeordnet sind, um auf den Seiten der Produkte (10) an den Enden der entsprechenden Produktreihe angeordnet zu werden, sowie in den offenen Zwischenräumen (11), die von der Produktreihe an den Seiten der Produkte (10) nach außen gerichtet sind, wodurch, wenn die Trägerelemente (3, 3') aufeinander zu bewegt werden, die Greifelemente (4) angeordnet sind, um derart gegen die Produkte (10) zu drücken, dass jedes individuelle Produkt (10) in der Produktreihe sowohl durch den Effekt der zwei Greifelemente (4) an den Seiten des Produkts als auch durch den Effekt der Produkte (4) getragen wird, die angrenzend des Produkts (4) positioniert sind.

11. Anordnung nach Anspruch 10, **dadurch gekennzeichnet, dass** die Anzahl der Greifelemente (4), die von den Trägerelementen (3, 3') umfasst werden, um eins größer als die Anzahl der Produkte (10) ist, die in der Produktreihe gehandhabt werden sollen.

## Revendications

1. Pince (1) comprenant au moins une unité de préhension (2, 2'), l'unité de préhension (2, 2') comprenant au moins un premier élément de soutien (3) et au moins un second élément de soutien (3'), lesquels éléments (3, 3') sont substantiellement parallèles et lesquels éléments (3, 3') comprennent au moins deux éléments de préhension (4) agencés sur les éléments de soutien (3, 3'), à distance l'un de l'autre, en étant substantiellement alignés et substantiellement en une même position par rapport à l'élément de soutien (3, 3') situé en regard, les éléments de préhension (4) étant agencés sur les éléments de soutien (3, 3') de telle manière que ces éléments de préhension (4) soient substantiellement parallèles les uns aux autres, et que l'axe médian longitudinal (B) des éléments de préhension (4) forme un angle substantiellement perpendiculaire avec les éléments de soutien (3, 3'), l'unité de préhension (2, 2') comprenant en outre des moyens (5, 6) pour déplacer les éléments de soutien (3, 3') l'un vers l'autre et l'un à l'opposé de l'autre afin de déplacer les éléments de préhension (4) positionnés sur les éléments de soutien (3, 3') l'un vers l'autre et l'un à l'opposé de l'autre.

2. Pince selon la revendication 1, **caractérisée en ce que** les éléments de préhension (4) sont agencés de manière fixe sur les éléments de soutien (3, 3').

3. Pince selon la revendication 1 ou la revendication 2, **caractérisée en ce que** l'élément de préhension (4) est une structure tubulaire creuse ou une tige pleine ou une structure en forme de barre.

4. Pince selon l'une quelconque des revendications précédentes, **caractérisée en ce que** l'élément de soutien (3, 3') est une structure tubulaire creuse ou une structure pleine en forme de poutre.

5. Pince selon l'une quelconque des revendications précédentes, **caractérisée en ce qu'**au moins un cylindre (5) est agencé en liaison avec le premier élément de soutien (3), et **en ce qu'**un piston (6) dudit cylindre (5) est agencé en liaison avec le deuxième élément de soutien (3'), les éléments de soutien (3, 3') étant ainsi mobiles l'un vers l'autre et l'un à l'opposé de l'autre en utilisant le cylindre (5) et le piston (6).

6. Pince selon la revendication 5, **caractérisée en ce que** le cylindre (5) est un cylindre actionné de manière pneumatique.

7. Pince selon l'une quelconque des revendications, **caractérisée en ce que** l'élément de préhension (4) est revêtu d'un matériau ayant un coefficient de friction élevé.

8. Pince selon l'une quelconque des revendications précédentes, **caractérisée en ce que** la pince (1) comprend deux unités de préhension (2, 2') comprenant un premier élément de soutien (3) en commun et un second élément de soutien (3') en commun, les deux éléments de soutien (3, 3') comprenant sept premier éléments de préhension (4) correspondant à la première unité de préhension (2) et sept second éléments de préhension (4) correspondant à la deuxième unité de préhension (2).

9. Dispositif permettant de manipuler au moins un objet (10) ayant une section transversale substantiellement arrondie, le dispositif comprenant au moins une pince (1) comprenant au moins une unité de préhension (2, 2'), l'unité de préhension (2, 2') comprenant au moins un premier élément de soutien (3) et au moins un second élément de soutien (3'), lesquels éléments de soutien (3, 3') sont substantiellement parallèles et lesquels éléments de soutien (3, 3') comprennent au moins deux éléments de préhension (4) agencés sur les éléments de soutien (3, 3') à distance l'un de l'autre, en étant substantiellement alignés et substantiellement en une même position par rapport à l'élément de soutien (3, 3') situé en regard, les éléments de préhension (4) étant agencés sur les éléments de soutien (3, 3') de telle manière que ces éléments de préhension (4) soient substantiellement parallèles les uns aux autres, et que l'axe médian longitudinal (B) des éléments de préhension (4) forme, avec les éléments de soutien (3, 3'), un angle substantiellement perpendiculaire, l'unité de préhension (2, 2') comprenant en outre des moyens (5, 6) pour déplacer les éléments de soutien (3, 3') l'un vers l'autre et l'un à l'opposé de l'autre afin de déplacer les éléments de préhension (4) positionnés sur les éléments de soutien (3, 3') l'un vers l'autre et l'un à l'opposé de l'autre, les éléments de soutien (3, 3') étant, afin de permettre à un objet (9) d'être saisi, agencés de sorte à être déplacés l'un vers l'autre de telle manière que les éléments de préhension (4) agencés sur les éléments de soutien opposés (3, 3') soient agencés pour venir se placer sur les côtés de l'objet (9) et pour exercer une pression contre l'objet (10) de telle manière que les éléments de préhension (4) retiennent l'objet (10) par les côtés de l'objet (10).

10. Dispositif selon la revendication 9, **caractérisé en ce que** les objets (10) sont agencés en deux rangées, les éléments de soutien (3, 3') étant, afin de permettre aux objets (10) d'être saisis, agencés de sorte à être déplacés l'un vers l'autre de telle manière que les éléments de préhension (4) agencés sur les éléments de soutien (3, 3') soient agencés pour venir se placer sur les côtés des objets (10) aux extrémités de la rangée d'objets correspondante, et dans les espaces ouverts (11) situés sur l'extérieur de la rangée d'objets sur les côtés des objets (10), de telle sorte que, lorsque les éléments de soutien (3, 3') sont déplacés l'un vers l'autre, les éléments de préhension (4) sont agencés pour exercer une pression contre les objets (10) de telle manière que chaque objet individuel (10) dans la rangée d'objets soit soutenu à la fois par l'effet des deux éléments de préhension (4) sur les côtés de l'objet et par l'effet des objets (4) positionnés de manière adjacente à l'objet (4).

11. Dispositif selon la revendication 10, **caractérisé en ce que** le nombre d'éléments de préhension (4) que comprennent les éléments de soutien (3, .3') est, par rapport au nombre d'objets (10) destinés à être manipulés dans la rangée d'objets, égale à ce nombre plus un.
